# EUROPEAN PATENT SPECIFICATION

(11) **EP 1 874 099 B1**
(45) Date of publication and mention of the grant of the patent: **01.12.2010**
(21) Application number: 07011037.4
(22) Date of filing: 05.06.2007
(51) Int. Cl.: H05H 1/30

(54) **Plasma torch for overcladding an optical fiber**
Plasmabrenner zum Ummanteln eines Lichtwellenleiters
Torche à plasma pour le gainage d'une fibre optique

(30) Priority: 27.06.2006 FR 0605760
(43) Date of publication of application: 02.01.2008
(73) Proprietor: Draka Comteq B.V., 1083 HJ Amsterdam (NL)
(72) Inventor: Petitfrère, Emmanuel, 59650 Villeneuve d'Ascq (FR); Calvo, Laurent, 59000 Lille (FR); Gonnet, Cédric, 75014 Paris (FR)
(74) Representative: op den Brouw-Sprakel, Vera Stefanie Irene

(56) References cited:
- EP-A2- 1 213 950
- US-A- 4 833 294
- US-A- 5 200 595
- US-B2- 6 639 174

## Description

The present invention relates to a plasma torch, of the type used for overcladding an optical fiber preform.

An optical fiber is made by drawing a preform on a drawing tower. A preform generally comprises a primary preform consisting of a very high quality glass tube which forms a portion of the core and of the cladding of the fiber. This primary preform is then overcladded or sleeved in order to increase its diameter and to form a final preform which may be used on a drawing tower.

Overcladding of a primary preform is generally carried out by projecting silica grains which are fused by a plasma torch under a temperature of the order of 2,300°C in order to be vitrified on the periphery of the primary preform. Natural silica grain is preferably used for reasons of costs, but synthetic and/or doped silica grain may also be used. The overcladding operation is generally carried out in a closed cabin with a controlled atmosphere in order to provide protection against electromagnetic perturbations and development of ozone emitted by the plasma torch.

U.S. 4,833,294 discloses a plasma torch, comprising a plasma tube for confining and directing gas flows within an electromagnetic field produced by a coil. The torch comprises a base member to receive the plasma tube and an exteriorly threaded insert member.

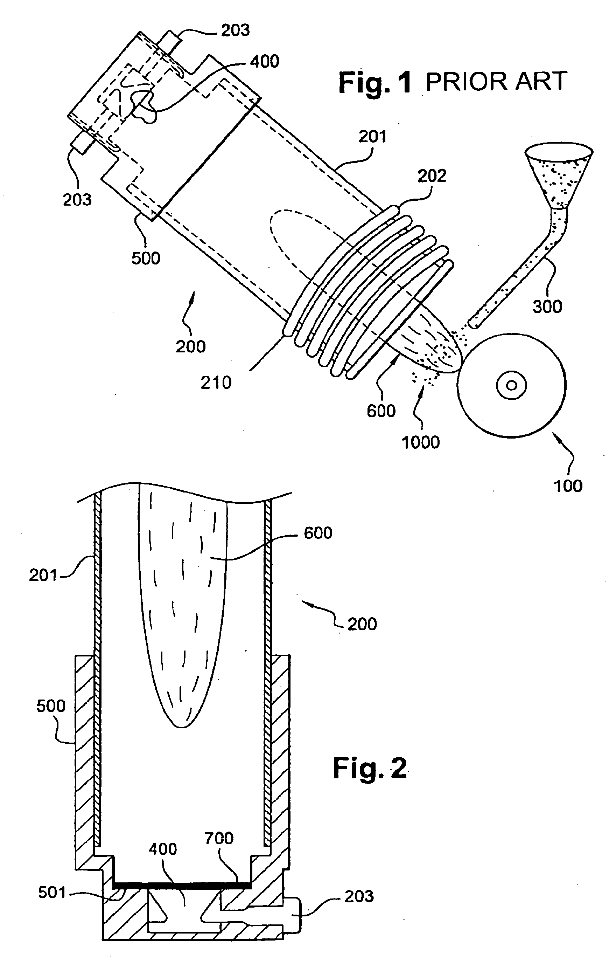

Fig. 1 schematically shows a plasma torch 200 according to the prior art in operation for overcladding an optical fiber preform 100 (shown in cross-section). Such a plasma torch 200 according to the prior art is for example known from document EP-A-1 213 950 or from document US-A-2003/0182971.

A plasma torch 200 (Fig. 1) comprises a confinement tube 201 which is used for confining the plasma. The confinement tube 201 may have a multi-wall structure to allow for flow of a liquid coolant. The confinement tube 201 of the plasma torch 200 should actually withstand the very high temperatures that are generated in the region of the plasma. The confinement tube 201 is thus generally in quartz, but it may also be in thermo conductive ceramic, as described in document US-A-5,200,595.

The plasma torch 200 according to the prior art also comprises a torch base 500 attached to one end of the confinement tube 201 and which torch base 500 comprises a support and a gas diffuser 400. The support and the gas diffuser 400 generally consist of stainless steel. At least one main gas inlet 203 is provided for injecting pressurized air into the confinement tube 201 of the plasma torch 200 in order to feed the plasma. An initiator gas, such as argon, may be injected at the beginning of the operation of the plasma torch 200 because of the low capability of air to initiate ionization. An induction coil 202 is wound around the confinement tube 201. The induction coil 202 is powered by induction generator 210 with alternating electric current in order to generate an electromagnetic field which ionizes the air in the confinement tube 201 in order to create a plasma flame 600. Fig. 1 also shows an optical fiber preform 100 (cross-section) and projected silica grains 1000 between the preform 100 and the plasma flame 600. The silica grains 1000 are projected from a projection tube 300, which may optionally be integrated to the plasma torch 200.

The induction generator 210 used with the plasma torch 200 typically provides a maximum power of the order of 200 kW, but the power which may be applied to the induction coil 202 of the plasma torch 200 is often limited to about 100 kW because of the design of the plasma torch 200.

The larger the power of the induction generator 210, the larger the flame 600 of the plasma and the faster the overcladding may be carried out because a larger amount of silica grains 1000 may be vitrified per unit of time. One therefore strives for reasons of productivity and yield, to increase the power of the plasma induced in the plasma torch 200, for example up to about 130 kW-150 kW. Now, when the power of the induction generator 210 increases, the plasma flame 600 extends. This extension towards the outside of the confinement tube 201 of the plasma torch 200 is beneficial as the plasma flame 600 then includes a larger amount of projected silica grains 1000 in front of the preform 100 and the overcladding yield is improved. However, when the plasma flame 600 is extended, it is also extended inside the confinement tube 201 and approaches the torch base 500. The torch base 500 then undergoes strong thermal stresses which may damage it. For example, the applicant was able to observe the occurrence of burns (blackening) and flaking in the steel torch bases 500, when the power of the induction generator 210 of the plasma torch 200 was increased in this way. Such a deterioration of the torch base 500 may lead to the projection of impurities in overcladding the preform 100, leading to the latter being discarded and to loss of productivity.

Therefore, there is a need for a plasma torch base which may withstand stronger operating power without deteriorating.

Accordingly, the invention proposes that the torch base 500 be covered with a ceramic material. The torch base may be in steel with the surface 501 internal to the confinement tube 201 being coated with a layer of ceramic material 700.

More specifically the invention proposes a plasma torch comprising:
- a confinement tube 201 for confining an induced plasma;
- a torch base 500 having a surface 501 internal to the confinement tube 201, wherein the torch base 500 comprises a support and a gas diffuser 400, characterized in that the surface internal to the confinement tube 201 of the support and/or of the gas diffuser 400 being coated with a ceramic material 700.

According to one embodiment, at least the support or the gas diffuser 400 is made of ceramic material 700. The ceramic material 700 may be selected from aluminum nitride, silicon nitride, boron nitride, alumina, (aluminum oxide Al₂O₃) or a mixture thereof.

According to one embodiment, the surface 501 internal to the confinement tube 201 of the support and/or gas diffuser 400, is coated with aluminum oxide.

According to one embodiment, the ceramic material 700 has a thermal expansion coefficient less than or equal to 10.10⁻⁶/°C.

According to one embodiment, the confinement tube 201 is in quartz.

The invention also relates to an apparatus for overcladding an optical fiber preform, the apparatus comprising:
- a support for receiving a primary preform 100;
- projection means 300 to propel silica grains 1000 towards the primary preform 100;
- at least one plasma torch 200 according to the invention;
- a current generator 210 feeding an induction coil 202 of the plasma torch 200.

The invention further relates to a method for overcladding an optical fiber preform with the apparatus according to the invention, the current generator 210 feeding the plasma torch 200 with alternating current with a power higher than 130 kW.

Other advantages and features of the invention will become apparent upon reading the description which follows of embodiments of the invention, given as an example and with reference to the appended drawings wherein:
Fig. 1 already described, shows a diagram of a plasma torch 200 according to the prior art;
Fig. 2 shows a diagram of a plasma torch 200 according to one embodiment of the present invention.

The invention proposes a plasma torch 200 for overcladding an optical fiber preform 100. The plasma torch 200 comprises a confinement tube 201 for confining the induced plasma, preferably in quartz for reasons of cost and resistance to temperature, and a torch base 500. The torch base 500 has a surface 501 internal to the confinement tube 201, this surface 501 being covered with a ceramic material 700.

Fig. 2 also shows the plasma flame 600. One strives to extend the plasma flame 600 in order to increase the yield of the overcladding, as this was explained above. The plasma flame 600 then also approaches the surface 501 of the torch base 500; this surface 501 must then be protected in order to avoid deterioration of the torch base 500.

According to one embodiment of the invention the surface 501 internal to the confinement tube 201 of the torch base 500 is coated with a ceramic material 700. For example, the ceramic material marketed by Corning® under the name of MACOR® or the ceramic material marketed by the Japanese company Tokuyama Soda under the name of SHAPAL^{™} are well suited for producing a torch base 500 for a plasma torch 200 according to the invention. The support and the gas diffuser 400 are then in stainless steel and a ceramic material layer, for example of aluminum oxide (Al₂O₃), is fixed on the surface 501 of the torch base 500. For example, a ceramic chip may be glued onto the surface of the diffuser 400 and/or a ceramic ring may be glued onto the surface of the support of the torch base 500. The ceramic coating 700 may have a thickness between 1 mm and 2.5 mm and may be machined before being glued for better adhesion onto the surface of the torch base 500.

Of course, other embodiments are possible. For example, the gas diffuser 400 may be made in ceramic whereas a ceramic ring covers the support of the torch base 500 around the gas diffuser 400.

The ceramic selected for covering the surface of the torch base 500 has a high temperature of use, above 800°C; a low thermal expansion coefficient in order to limit distortions in the torch base, for example a thermal expansion coefficient less than or equal to 10.10⁻⁶/°C. MACOR® and SHAPAL^{™} further have a high dielectric resistance of the order of 40 kV/mm, which limits the occurrence of an electric arc. Moreover, the ceramic materials, such as MACOR® and SHAPAL^{™}, used for covering the surface 501 of the torch base 500 may have relatively different heat conductivity values. For example, MACOR® and aluminum oxide (Al₂PO₃) have low heat conductivity which limits energy losses of the plasma torch 200 through the torch base 500; and SHAPAL^{™} has high heat conductivity by which the heat generated by the plasma flame 600 may be removed effectively in order to limit the surface temperature of the torch base 500 and to thereby increase its lifetime.

The table below reports the values of the maximum temperature of use in °C, of the dielectric resistance, of the heat conductivity and of the thermal expansion coefficient for three relevant ceramic materials covering the torch base 500.

| | Tmax (°C) | R_{dielec} (kV/mm) | Heat conduct. (W/m.K) at 25°C | Thermal expans. coeff. (10.10⁻⁶/° ) |
|---|---|---|---|---|
| MACOR® | 800 | 40 | 1.46 | 9.3 |
| SHAPAL^{™} | 1,000 | 40 | 90 | 4.4 |
| Al₂O₃ | 1,850 | 12 | 9.1 | 8.6 |

The invention thus proposes an apparatus for overcladding an optical fiber primary preform 100 which apparatus comprises at least one plasma torch 200 as described above. Such a plasma torch 200 has an improved lifetime when it is used with high powers of the current generator 210, for example powers superior to 130 kW.

## Claims

1. A plasma torch (200) comprising:
- a confinement tube (201) for confining an induced plasma;
- a torch base (500) having a surface (501) internal to the confinement tube (201), wherein the torch base (500) comprises a support and a gas diffuser (400), **characterized in that** the surface (501) internal to the confinement tube (201) of the support and/or of the gas diffuser (400) is coated with a ceramic material (700).

2. The plasma torch (200) according to claim 1, wherein at least the support or the gas diffuser (400) being made of ceramic material (700).

3. The plasma torch (200) according to claim 2, wherein the ceramic material (700) is made of a material selected from the group consisting of aluminum nitride, silicon nitride, boron nitride, aluminum oxide (Al₂O₃) or a mixture of them.

4. The plasma torch (200) according to any one of claims 1-3, wherein the ceramic material (700) is made of aluminum oxide (Al₂O₃).

5. The plasma torch (200) according to any one of claims 1-4, wherein the ceramic material (700) has a thermal expansion coefficient inferior or equal to 10.10⁻⁶/°C.

6. The plasma torch (200) according to any one of claims 1-5, wherein the confinement tube (201) is made of quartz.

7. An apparatus for overcladding an optical fiber preform, the apparatus comprising :
- a support for receiving a primary preform (100);
- projection means (300) to propel silica grains (1000) towards the primary preform (100);
- at least one plasma torch (200) according to any one of claims 1-6;
- a current generator (210) feeding an induction coil (202) of the plasma torch (200).

8. A method for overcladding an optical fiber preform (100) with the apparatus according according to claim 7, the current generator (210) feeding the induction coil (202) of the plasma torch (200) with alternative current with a power superior to 130kW.

## Patentansprüche

1. Plasmafackel (200), umfassend:
- ein Einschlussrohr (201) zum Einschluss eines erzeugten Plasmas;
- eine Fackelbasis (500) mit einer Oberfläche (501), welche intern bezüglich des Einschlussrohrs (201) ist, wobei die Fackelbasis (500) eine Halterung und einen Gasdiffusor (400) aufweist, **dadurch gekennzeichnet, dass** die bezüglich des Einschlussrohrs (201) interne Oberfläche (501) der Halterung und/oder des Gasdiffusors (400) mit einem Keramikmaterial (700) beschichtet ist.

2. Plasmafackel (200) nach Anspruch 1, wobei wenigstens die Halterung oder der Gasdiffusor (400) aus einem Keramikmaterial (700) hergestellt ist.

3. Plasmafackel (200) nach Anspruch 2, wobei das Keramikmaterial (700) aus einem Material hergestellt ist, welches ausgewählt ist aus der Gruppe bestehend aus Aluminiumnitrid, Siliziumnitrid, Bornitrid, Aluminiumoxid (Al₂O₃) oder einer Mischung davon.

4. Plasmafackel (200) nach einem der Ansprüche 1-3, wobei der Keramikmaterial (700) aus Aluminiumoxid (Al₂O₃) hergestellt ist.

5. Plasmafackel (200) nach einem der Ansprüche 1-4, wobei das Keramikmaterial (700) einen thermischen Expansionskoeffizienten aufweist, welcher kleiner oder gleich 10·10⁻⁶/°C ist.

6. Plasmafackel (200) nach einem der Ansprüche 1-5, wobei das Einschlussrohr (201) aus Quarz hergestellt ist.

7. Vorrichtung zur Ummantelung einer Vorform einer optischen Faser, wobei die Vorrichtung umfasst:
- eine Halterung zur Aufnahme einer primären Vorform (100);
- Projektionsmittel (300) zum Treiben von Silikakörnern (1000) in Richtung der primären Vorform (100);
- wenigstens eine Plasmafackel (200) gemäß einem der Ansprüche 1-6;
- einen Stromgenerator (210), welcher eine Induktionsspule (202) der Plasmafackel (200) speist.

8. Verfahren zur Ummantelung einer Vorform (100) einer optischen Faser mit der Vorrichtung gemäß Anspruch 7, wobei der Stromgenerator (210) die Induktionsspule (202) der Plasmafackel (200) mit Wechselstrom einer Leistung von größer als 130 kW speist.

## Revendications

1. Torche à plasma (200) comprenant :
- un tube de confinement (201) pour confiner un plasma induit ;
- une base de torche (500) ayant une surface (501) intérieure au tube de confinement (201), la base de torche (500) comprenant un support et un diffuseur de gaz (400), **caractérisée en ce que** la surface (501) intérieure au tube de confinement (201) du support et/ou du diffuseur de gaz (400) est revêtue d'un matériau céramique (700).

2. Torche à plasma (200) selon la revendication 1, dans laquelle au moins le support ou le diffuseur de gaz (400) est constitué d'un matériau céramique (700).

3. Torche à plasma (200) selon la revendication 2, dans laquelle le matériau céramique (700) est constitué d'un matériau choisi dans le groupe constitué du nitrure de l'aluminium, du nitrure de silicium, du nitrure de bore, de l'oxyde d'aluminium (Al₂O₃) ou d'un mélange de ceux-ci.

4. Torche à plasma (200) selon l'une quelconque des revendications 1 à 3, dans laquelle le matériau céramique (700) est constitué d'oxyde d'aluminium (Al₂O₃).

5. Torche à plasma (200) selon l'une quelconque des revendications 1 à 4, dans laquelle le matériau céramique (700) a un coefficient de dilatation thermique inférieur ou égal à 10.10⁻⁶/°C.

6. Torche à plasma (200) selon l'une quelconque des revendications 1 à 5, dans laquelle le tube de confinement (201) est constitué de quartz.

7. Appareil de gainage d'une préforme de fibre optique, l'appareil comprenant :
- un support pour recevoir une préforme primaire (100) ;
- des moyens de projection (300) pour propulser des grains de silice (1000) vers la préforme primaire (100) ;
- au moins une torche à plasma (200) selon l'une quelconque des revendications 1 à 6 ;
- un générateur de courant (210) alimentant une bobine d'induction (202) de la torche à plasma (200).

8. Procédé de gainage d'une préforme de fibre optique (100) au moyen de l'appareil selon la revendication 7, le générateur de courant (210) alimentant la bobine d'induction (202) de la torche à plasma (200) en courant alternatif avec une puissance supérieure à 130 kW.
